# EUROPEAN PATENT SPECIFICATION

(11) **EP 3 086 513 B1**
(45) Date of publication and mention of the grant of the patent: **29.07.2020**
(21) Application number: 13900539.1
(22) Date of filing: 23.12.2013
(51) Int. Cl.: H04L 12/46, H04L 12/66

(54) **MESSAGE PROCESSING METHOD AND GATEWAY**
NACHRICHTENVERARBEITUNGSVERFAHREN UND -GATEWAY
PROCÉDÉ ET PASSERELLE DE TRAITEMENT DE MESSAGES

(43) Date of publication of application: 26.10.2016
(73) Proprietor: Huawei Technologies Co., Ltd., Longgang District Shenzhen, Guangdong 518129 (CN)
(72) Inventor: PENG, Chenghui, Shenzhen Guangdong 518129 (CN); ZHANG, Wei, Shenzhen Guangdong 518129 (CN); TAN, Wei, Shenzhen Guangdong 518129 (CN)
(74) Representative: Goddar, Heinz J.
(86) International application number: PCT/CN2013/090233
(87) International publication number: WO 2015/096005

(56) References cited:
- WO-A1-2013/144747
- CN-U- 201 846 315
- CN-Y- 201 319 631
- US-A1- 2013 054 761
- US-A1- 2013 215 758
- US-A1- 2013 301 522
- Etsi: "ETSI GS NFV 001 v1.1.1 (2013-10); Network Functions Virtualisation (NFV); Use Cases", , 10 October 2013 (2013-10-10), pages 2013-10, XP055224702, Retrieved from the Internet: URL:http://www.etsi.org/deliver/etsi_gs/nf v/001_099/001/01.01.01_60/gs_nfv001v010101 p.pdf [retrieved on 2015-10-30]
- "Digital cellular telecommunications system (Phase 2+); Universal Mobile Telecommunications System (UMTS); LTE; Network architecture (3GPP TS 23.002 version 11.6.0 Release 11)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 2, no. V11.6.0, 1 June 2013 (2013-06-01), XP014156994,
- "Universal Mobile Telecommunications System (UMTS); LTE; 3GPP Evolved Packet System (EPS); Evolved General Packet Radio Service (GPRS) Tunnelling Protocol for Control plane (GTPv2-C); Stage 3 (3GPP TS 29.274 version 11.8.0 Release 11)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP CT 4, no. V11.8.0, 1 September 2013 (2013-09-01), XP014157609,

## Description

### TECHNICAL FIELD

Embodiments of the present invention relate to the communications technologies, and in particular, to a message processing method and a gateway.

### BACKGROUND

Using a universal platform such as a cloud computing platform in the communications technology (CT for short below) field is one of the development trends in the field of communications devices. An existing gateway virtualization method is to implement functions of a gateway by using software only, where a relationship between functional modules in the gateway remains unchanged, and the functions of the gateway are no longer implemented by using original special-purpose hardware, but instead, are implemented by using software based on a universal platform. However, similar to a traditional physical gateway, an existing virtual gateway is integrated with numerous functions that are tightly coupled together and restrict each other, resulting in poor scalability and low communication efficiency of the existing virtual gateway. Etsi: "ETSI GS NFV 001 v1.1.1 (2013-10); Network Functions Virtualisation (NFV); Use Cases", 10 October 2013, pp. 2013-10 discloses virtualized network functions (VNFs), e.g. S/P-GW, MME which may scale independently according to their specific resource requirements, e.g. in a situation where it is necessary to increase user plane resources without affecting the control plane and vice versa. Further details are disclosed in "Digital cellular telecommunications System (Phase 2+); Universal Mobile Telecommunications System (UMTS); LTE; Network architecture (3GPP TS 23.002 Version 11.6.0 Release 11)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPPSA2, no. V11.6.0, 1 June 2013 and "Universal Mobile Telecommunications System (UMTS); LTE; 3GPP Evolved Packet System (EPS); Evolved General Packet Radio Service (GPRS) Tunnelling Protocol for Control plane (GTPv2-C); Stage 3 (3GPP TS 29.274 Version 11.8.0 Release 11)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP CT 4, no. V11.8.0, 1 September 2013. WO2013/144747 A1 discloses a cloud manager which monitors resource utilization of each control plane module and the control plane traffic. US2013/0215758 A1 discloses a virtualized open wireless services software architecture where service requests cause the mapping of a requested service to an underutilized hardware resource.

### SUMMARY

The present invention provides a message processing method according to claim 7 and a gateway according to claim 1, to increase scalability of the gateway.

An embodiment of the present invention provides a gateway, including:
a control plane module configured to implement a control plane function of the gateway and at least one user plane module configured to implement a user plane function of the gateway, where
the control plane module is connected to the at least one user plane module by using an interface;
the control plane module is configured to generate a service control rule and deliver the service control rule to the user plane module, where the service control rule is used to indicate a data operation that needs to be executed by the user plane module of the gateway; and
the user plane module is configured to forward or process data according to the received service control rule.

Preferably, the user plane module of the gateway may further include: at least one input/output I/O submodule, at least one session processing submodule, at least one expansion submodule, and an internal exchange submodule, where
the I/O submodule is configured to implement a data I/O function of the gateway, and implement, according to the service control rule, forwarding of a service message of UE;
the session processing submodule is configured to implement a service session processing function of the UE according to the service control rule;
the expansion submodule is configured to expand the user plane module according to the service control rule of the control plane module; and
the internal exchange submodule is configured to form a communications link between two or more user plane modules, to implement data exchange between the two or more user plane modules.

Preferably, the control plane module of the gateway may further include:
an access management submodule, configured to implement an access management function of the user equipment UE;
a session management submodule, configured to implement a service session management function of the UE and generate the service control rule; and
a resource management submodule, configured to manage a resource used by the user plane module.

According to the message processing method and the gateway of the embodiments of the present invention, the gateway is divided into a control plane module and a user plane module, so that decoupling of a control plane function and a user plane function of the gateway is implemented, where a control plane controls work of a user plane in a manner of generating a service control rule, and the user plane executes a specific data operation according to the service control rule, thereby increasing scalability of the gateway and improving working efficiency of the gateway. Preferably, the control plane module and the user plane may be further divided into functional modules, so that resource adjustment can be dynamically performed on the functional modules.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic structural diagram of a gateway device based on special-purpose hardware;
FIG. 2 is a schematic structural diagram of a platform on which a gateway runs according to the present invention;
FIG. 3 is a schematic structural diagram of Embodiment 1 of a gateway according to the present invention;
FIG. 4 is a schematic structural diagram of Embodiment 2 of a gateway according to the present invention;
FIG. 5 is a flowchart of Embodiment 1 of a message processing method according to the present invention;
FIG. 6 is a flowchart of Embodiment 2 of a message processing method according to the present invention;
FIG. 7 is a flowchart of Embodiment 1 of service processing of a gateway according to the present invention;
FIG. 8 is a flowchart of Embodiment 2 of service processing of a gateway according to the present invention; and
FIG. 9A and FIG. 9B are a flowchart of Embodiment 3 of service processing of a gateway according to the present invention.

### DESCRIPTION OF EMBODIMENTS

Gateway devices refer to data gateway devices that are defined in the 3rd Generation Partnership Project (3GPP for short below) specifications, such as a public data network gateway (PGW for short below), and a gateway general packet radio service support node (GGSN for short below), which are all edge devices of a CT network and an external public data network (PDN for short below), are configured to implement packet access control, route selection, user packet data context management, user bearer management, and the like, and are one of the most important user plane devices for a CT core network. The gateway devices have powerful functions, and support a large quantity of users and a huge amount of data traffic.

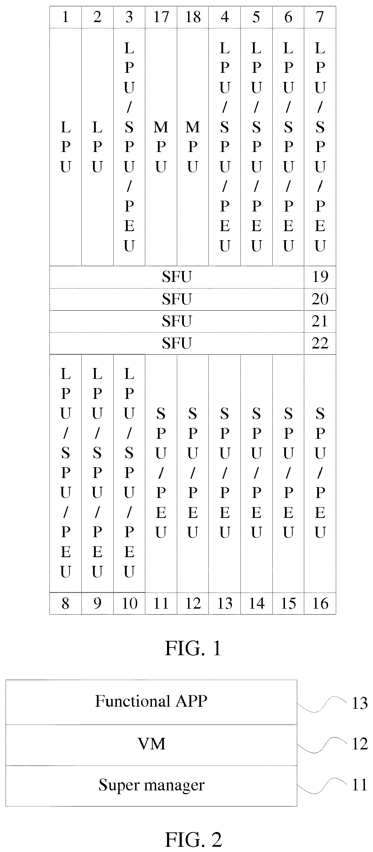

FIG. 1 is a schematic structural diagram of a gateway device based on special-purpose hardware. As shown in FIG. 1, a typical gateway device based on special-purpose hardware has very complex functions, including: a line interface processing unit (LPU for short below), which provides a physical interface to an external network; a service processing unit (SPU for short below), which implements functions such as service control, user packet forwarding, process control, quality of service, and content parsing; a main processing unit (MPU for short below), which is mainly responsible for control and management work of a system, including route calculation, device management and maintenance, device monitoring, and the like; a switch fabric unit (SFU for short below), which bears a switch function of service data of the entire system, and uses a non-blocking switch fabric; a switch and route processing unit (SRU for short below), which is mainly responsible for control and management work of the system, including route calculation, device management and maintenance, device monitoring, and the like; and a packet enforcement unit (PEU for short below), which provides an Internet Protocol service quality management (IPSQM for short below) function, that is, implements shaping for downlink traffic based on a granularity of a base station, and can smooth downlink burst traffic of the base station, and improve bandwidth utilization of a bearer link of a user plane interface between the base station and the gateway.

In a current virtualized gateway device, the foregoing functions that run on the special-purpose hardware are one-to-one mapped, in a simple software-defined manner, onto software programs that implement the same functions, so as to ensure that an overall logical architecture remains unchanged, and ensure stability of the system architecture. However, the functions have a same relationship as that of the original system, and are relatively strongly coupled, making it difficult to achieve higher resource utilization. This patent is directed to resolving this problem.

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

A gateway of the present invention is a gateway that runs on a cloud platform. By means of division according to gateway functions, each functional module may be run on a cloud platform including a super manager and a virtual machine. The super manager is an intermediate layer that runs between hardware and an operating system. A main objective of the super manager is to enable multiple operating systems and applications to share the hardware. The super manager is a key part in a virtualization technology, is mainly responsible for access to hardware resources, and is also responsible for providing protection between virtual machines. The virtual machine may run a common operating system, such as Microsoft Windows (windows) or an open-source operating system (linux). The functional modules of the gateway may be run in virtual machine environments as application (APP for short below) programs, where each functional module corresponds to at least one virtual machine environment. In this way, a communication mechanism between multiple functional modules is changed to communication between APP programs that run on multiple virtual machines, so that hardware resources used by the modules are decoupled, and dynamic resource management can be implemented for each independent functional module. For example, a virtual machine environment corresponding to a functional module can be added or reduced. Currently, an optimized technology for communication between multiple programs that is provided in a cloud technology can be used in an implementation of a gateway according to implementation manners of the present invention, so as to improve communication efficiency and reduce a communication delay.

FIG. 2 is a schematic structural diagram of a platform on which a gateway runs according to the present invention. As shown in FIG. 2, the running platform includes a super manager 11, a virtual machine (VM for short below) 12, and a functional APP 13. The super manager 11 may be a Hypervisor, and is an intermediate software layer that runs between a basic physical server and an operating system. The VM 12 is configured to run a common operating system. The functional APP 13 is configured to implement, in an environment provided by the VM 12, a function of the gateway in a form of an APP, where the function may be a control plane function of the gateway, or may be a session processing function of the gateway. Specific function division depends on an actual running status of the gateway and is not specifically limited herein.

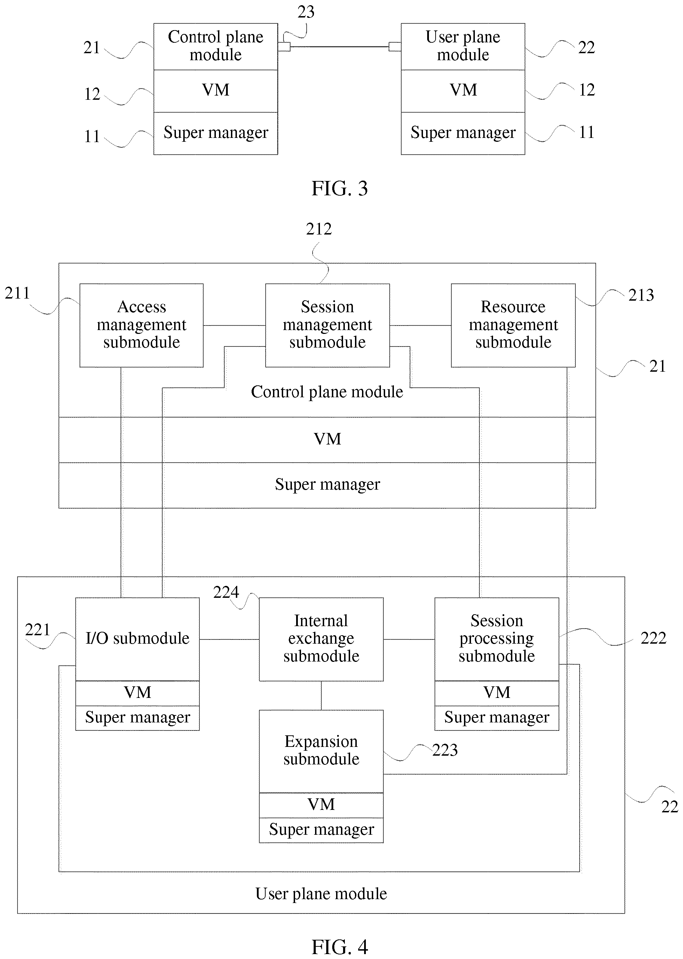

FIG. 3 is a schematic structural diagram of Embodiment 1 of a gateway according to the present invention. As shown in FIG. 3, the gateway of this embodiment runs on a cloud platform. By means of division according to functions, the gateway device may include: a control plane module 21 and a user plane module 22, where the control plane module 21 is connected to the user plane module 22 by using an interface 23, the control plane module 21 is configured to generate a service control rule and deliver the service control rule to the user plane module, and the user plane module 22 is configured to forward or process data according to the service control rule.

The running platform structure shown in FIG. 2 may be used as a virtual machine environment of this embodiment, where the functional APP includes an APP that implements a function of the control plane module 21, and an APP that implements a function of the user plane module 22. The two APPs separately run on at least one virtual machine.

Preferably, based on the foregoing gateway structure, the user plane module 22 may be divided into functional modules, including: at least one input/output I/O submodule, at least one session processing submodule, at least one expansion submodule, and an internal exchange submodule; and the control plane module 21 may be divided into functional modules, including: an access management submodule, a session management submodule, and a resource management submodule.

In this embodiment, when a gateway device based on special-purpose hardware is virtualized, a control plane function and a user plane function of the gateway device are separated to form a gateway including a control plane module 21 and a user plane module 22, where the control plane module 21 is connected to the user plane module 22 by using an interface 23, and the interface 23 may be an interface newly defined for the gateway, or may be an existing connection interface, which is not specifically limited in this embodiment. The control plane module 21 is configured to generate a service control rule, and deliver the service control rule to the user plane module. The user plane module 22 is configured to process data according to the service control rule. There may be one or more user plane modules 22, and a specific quantity may be determined according to factors such as a further division result of the user plane function, types and a quantity of services processed by the gateway, and a load status of the user plane module 22.

In this embodiment, the gateway is divided into a control plane module and a user plane module, so that decoupling of a control plane function and a user plane function of the gateway is implemented, where a control plane controls work of a user plane in a manner of generating a service control rule, and the user plane executes a specific data operation according to the service control rule, thereby increasing scalability of the gateway and improving working efficiency of the gateway.

FIG. 4 is a schematic structural diagram of Embodiment 2 of a gateway according to the present invention. As shown in FIG. 4, the gateway of this embodiment runs on a cloud platform. Based on the apparatus structure shown in FIG. 3, further, the control plane module 21 may include: an access management submodule 211, a session management submodule 212, and a resource management submodule 213, where the access management submodule 211 is configured to implement an access management function of user equipment (User Equipment, UE for short below); the session management submodule 212 is configured to implement a service session management function of the UE, and generate the service control rule; and the resource management submodule 213 is configured to manage a resource used by the user plane module.

In this embodiment, the access management submodule 211 is mainly responsible for managing an access process of the UE. For example, the access management submodule 211 may implement UE access authentication, UE access control, access point (APN for short below) allocation, Internet Protocol (IP for short below) address allocation, and the like. The session management submodule 212 is mainly responsible for managing a session of the UE, and generating the service control rule. For example, the session management submodule 212 may manage a context of the session of the UE, manage a session processing submodule of a user plane, and so on. The resource management submodule 213 is mainly responsible for resource management. For example, the resource management submodule 213 may monitor a resource consumption status of the user plane module 22, recycle or allocate a resource, dynamically adjust a resource occupancy ratio of the user plane module 22, and so on; or when a user plane module 22 is faulty, the resource management submodule 213 may allocate a new resource according to requirements to bear a function of the user plane module 22.

In this embodiment, the control plane module 21 is further divided, and three main functions of the control plane are separately implemented by corresponding modules. In this way, on one hand, the control plane module 21 has a clearer structure; on the other hand, the control plane module 21 can perform service processing in a more organized manner, functions of the submodules of the control plane are clear, and the processing process can be further simplified.

Further, as shown in FIG. 4, the user plane module 22 may include: an input/output (I/O for short below) submodule 221, a session processing submodule 222, an expansion submodule 223, and an internal exchange submodule 224, where the I/O submodule 221 is configured to implement a data I/O function of the gateway, and implement, according to the service control rule, forwarding of a service message of UE; the session processing submodule 222 is configured to implement a service session processing function of the UE according to the service control rule; the expansion submodule 223 is configured to expand the user plane module according to the service control rule of the control plane module; and the internal exchange submodule 224 is configured to form a communications link between two or more user plane modules, to implement data exchange between the two or more user plane modules. The user plane module 22 of this embodiment may include one or more I/O submodules 221, one or more session processing submodules 222, and one or more expansion submodules 223, and a specific quantity may be determined according to factors such as a further division result of the user plane function, types or a quantity of services processed by the gateway, and a load status of the user plane module 22, which is not specifically limited in this embodiment.

In this embodiment, the user plane module 22 implements high-speed data processing according to the service control rule delivered by the control plane module 21. Specifically, the I/O submodule 221 is responsible for data input and output processing of the gateway to the outside; the session processing submodule 222 is responsible for implementing packet processing of a service session according to the service control rule delivered by the control plane; and the expansion submodule 223 is responsible for expanding the user plane module 22. For example, if the gateway needs to implement a newly-added function, and the current user plane module 22 does not include a submodule that can implement the newly-added function, the expansion submodule 223 needs to implement the newly-added function. For another example, if the I/O submodule 221 of the gateway is currently in an overloaded working state, the expansion submodule 223 needs to implement the input and output function of the gateway to the outside to partake workload of the I/O submodule 221. The internal exchange submodule 224 is responsible for connecting various user plane modules 22, which can resolve a communication bandwidth bottleneck problem of the gateway, and implement high-speed data exchange inside the gateway.

The running platform structure shown in FIG. 2 may be used as a virtual machine environment of this embodiment, where the functional APP includes an APP that implements a function of the control plane module 21, an APP that implements a function of the I/O submodule 221 of the user plane, an APP that implements a function of the session processing submodule 222 of the user plane, and an APP that implements a function of the expansion submodule 223 of the user plane. The three functional modules of the control plane module 21, which are the access management submodule 211, the session management submodule 212, and the resource management submodule 213, may be deployed in a same virtual machine according to requirements, or may be separately deployed in multiple virtual machines. The submodules of the user plane module 22 may separately run in at least one virtual machine.

In this embodiment, the user plane module 22 is further divided, and each submodule is independently deployed. For example, the I/O submodule 221 is an independent user plane module, a platform used to implement the function of this submodule is responsible only for an I/O function, and multiple such platforms may be used to implement the I/O function. In this way, decoupling of multiple functions of the user plane is implemented, so that functions and performance of the gateway can be flexibly expanded and improved, thereby improving working efficiency of the gateway.

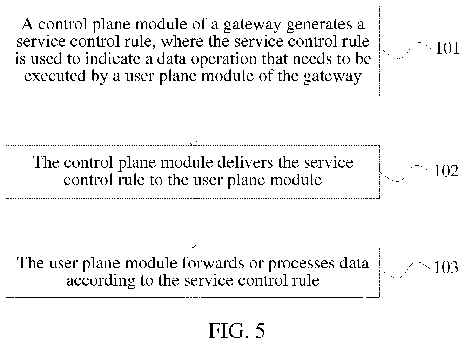

FIG. 5 is a flowchart of Embodiment 1 of a message processing method according to the present invention. As shown in FIG. 5, the method of this embodiment may include:
Step 101: A control plane module of a gateway generates a service control rule, where the service control rule is used to indicate a data operation that needs to be executed by a user plane module of the gateway.

The message processing method of this embodiment is executed by the gateway. The gateway may use the structure of any one of the apparatus embodiments shown in FIG. 2 to FIG. 4. The gateway runs on a cloud platform. In this embodiment, the service control rule is used to indicate the data operation that needs to be executed by the user plane module of the gateway, and specifically, may be considered as a basis for the user plane module to execute the data operation. For example, a service message forwarding rule may be used to instruct an I/O submodule of the user plane module to forward, to an access management submodule of the control plane module, a service request message or an access request message sent by UE; a bearer setup rule may be used to instruct a session processing submodule of the user plane module to perform quality of service control on a data packet of the UE. Because a function of a control management layer of the gateway device is integrated in the control plane module, the control plane module can know a current resource usage status of the whole gateway, and instruct behavior of each user plane module by using the service control rule. The service control rule includes two parts: rule feature information and a data operation. The rule feature information is used to match the service request message of the UE, and may include feature information of a Media Access Control (Medium Access Control, MAC for short below) layer, a network layer, a transport layer, a session layer, and an application layer, for example, a source IP, a source MAC address, a protocol type, and a service identifier of the message. The data operation is used to instruct specific work of the user plane module, for example, to instruct the I/O module to forward a data packet to another module, or instruct the session processing submodule to execute a specific data control operation. Content of the data operation may include only instructing behavior of a user plane module that participates in a current service, or may include instructing behavior of all user plane modules of the gateway. The user plane module executes the data operation in the service control rule, only when the service request message completely matches the rule feature information. That the control plane module generates the service control rule may be considered as that a data path for processing a service data packet is established between the user plane modules. Each user plane module only needs to execute a related data operation in the service control rule, and the data path can be automatically established.

Step 102: The control plane module delivers the service control rule to the user plane module.

In this embodiment, that the control plane module delivers the generated service control rule to the user plane module may be delivering the service control rule to all user plane modules, or may be delivering the service control rule to only the user plane module that participates in the current service. For example, when the UE accesses a service, only the I/O submodule of the user plane participates in the service. The control plane module may deliver a service control rule corresponding to the service only to the I/O submodule, or may deliver the service control rule to all user plane modules, including the I/O submodule, the session processing submodule, and the like. The two manners can both be used to implement the method of this embodiment, which is not specifically limited in this embodiment.

Step 103: The user plane module forwards or processes data according to the service control rule.

In this embodiment, after receiving the service control rule delivered by the control plane module, the user plane module performs a corresponding operation according to the data operation part in the service control rule. For example, the I/O submodule forwards a data packet to the access management submodule of the control plane according to the instruction of the service control rule; the session processing submodule forwards a data packet to another user plane module according to the instruction of the service control rule, and performs quality of service (Quality of Service, QoS for short below) processing on the data packet.

In this embodiment, functions of a gateway are decoupled by dividing the gateway into a control plane module and a user plane module, so that the control plane module generates a service control rule to instruct behavior of the user plane module, and the user plane module executes a specific data operation according to the service control rule. In this way, not only basic functions of the gateway are implemented, but also more diversified functions of the gateway can be implemented according to requirements, thereby resolving a problem that multiple functions of an existing gateway are tightly coupled together and restrict each other and it is difficult to expand and improve functions and performance of the gateway.

Further, in the foregoing step 103 of this embodiment, the user plane module processes data according to the service control rule, and a specific implementation manner may be at least one method of the following methods: first, the user plane module forwards the service request message and a user information data packet to another user plane module or the control plane module according to the service control rule; and second, the user plane module processes, according to the service control rule, a data packet sent by the user equipment UE.

In this embodiment, the user plane module of the gateway executes a specific data operation according to the data operation part in the service control rule. The data operation may be data forwarding. For example, the I/O submodule forwards a data packet of the UE to the control plane module, or forwards a data packet sent by the control plane module to the session processing submodule. The data operation may also be processing a data packet according to a requirement of an operator. For example, the session processing submodule executes, according to bearer information in the service control rule generated by the control plane module, a QoS control operation that corresponds to the bearer information, an expansion submodule configured to implement a compression function performs compression processing on a data packet, an expansion submodule configured to implement an acceleration function performs a data acceleration operation for web browsing of the UE, and so on. Based on the foregoing gateway structure, in this embodiment, diversified user plane operations of the gateway can be flexibly executed without being limited by the structure of the gateway device, making a service processing process for the UE more flexible and efficient.

Further, in the foregoing step 101 of this embodiment, the control plane module of the gateway generates the service control rule, and a specific implementation manner may be at least one method of the following methods: first, the control plane module presets the service control rule according to a function of the gateway; and second, the control plane module generates the service control rule according to the service request message. The second method is implemented after the control plane module has received the service request message sent by the user plane module. Further, before the control plane module receives the service request message, the I/O submodule of the user plane module receives a service request message sent by the UE, and sends the service request message to the control plane module.

In this embodiment, a method used by the control plane module of the gateway to generate the service control rule may be presetting a service control rule according to a basic function of the gateway. For example, the control plane module may preset a message forwarding rule of the I/O submodule according to a gateway device function and a gateway device signaling message that are defined in 3GPP standards, so that when receiving, by using an interface, a signaling message sent by another network element, the I/O submodule forwards the signaling message to the session management submodule of the control plane module according to the preset service control rule. Alternatively, the method used by the control plane module of the gateway to generate the service control rule may be: after a service request message of the UE sent by the I/O submodule is received, generating a service control rule for the service request message. For example, the control plane module generates a bearer setup rule according to a bearer setup request sent by the I/O submodule, so that the session processing submodule performs QoS control on a data packet, and the I/O submodule forwards the data packet. By means of the foregoing two methods for generating a service control rule, the control plane module not only can generate a service control rule for a basic function of the gateway, so as to enable the user plane module to implement the basic function, but also can generate a service control rule for a service request of the UE, which is an expansion of the basic function of the gateway, so that functions and performance of the gateway can be flexibly expanded and improved.

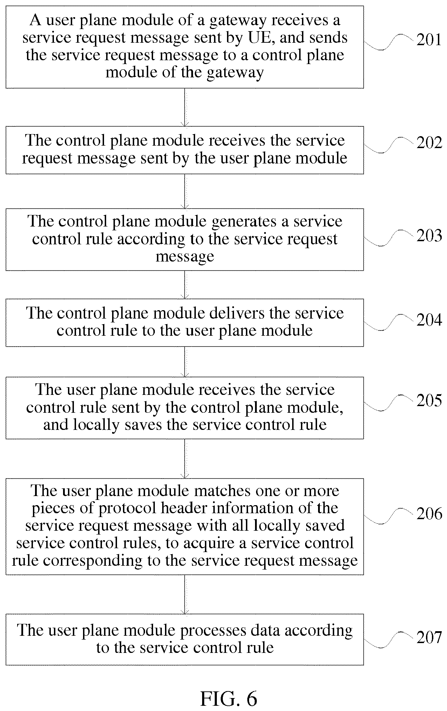

FIG. 6 is a flowchart of Embodiment 2 of a message processing method according to the present invention. As shown in FIG. 6, the method of this embodiment may include:
Step 201: A user plane module of a gateway receives a service request message sent by UE, and sends the service request message to a control plane module of the gateway.
Step 202: The control plane module receives the service request message sent by the user plane module.
Step 203: The control plane module generates a service control rule according to the service request message.

In this embodiment, a process in which the control plane module generates the service control rule according to the service request message is similar to step 101 of the foregoing method embodiment, and details are not described herein again.

Step 204: The control plane module delivers the service control rule to the user plane module.

In this embodiment, a process in which the control plane module delivers the service control rule to the user plane module is similar to step 102 of the foregoing method embodiment, and details are not described herein again.

Step 205: The user plane module receives the service control rule sent by the control plane module, and locally saves the service control rule.

In this embodiment, in order to make a subsequent operation more efficient, after receiving the service control rule sent by the control plane, the user plane module locally saves the service control rule. If there is a same or similar service request subsequently, the locally saved service control rule may be directly used, and interaction with the control plane module is no longer needed, which simplifies the service process.

Step 206: The user plane module matches one or more pieces of protocol header information of the service request message with all locally saved service control rules, to acquire a service control rule corresponding to the service request message.

In this embodiment, the service request message of the UE that is received by the user plane module includes one or more protocol headers (Protocol Header, PH for short below), which may be used to record feature information of at least one of a MAC layer, a network layer, a transport layer, a session layer, and an application layer, for example, a service identifier, gateway signaling, or a protocol type of the service request message. The user plane module matches information in the protocol headers with rule feature information of all locally saved service control rules, and if one or more pieces of feature information do not match, filters out the service control rule, until a service control rule that completely matches the service request message is obtained. The service control rule is a rule generated by the control plane module for the service request, and includes a data operation that needs to be executed by the user plane module.

Step 207: The user plane module processes data according to the service control rule.

In this embodiment, a process in which the user plane module processes data according to the service control rule is similar to step 103 of the foregoing method embodiment, and details are not described herein again.

In this embodiment, the control plane module generates the service control rule for the service request message of the UE, and instructs the user plane module to execute a corresponding data operation, making a service processing process of the gateway simple and efficient.

Further, after the foregoing step 202 of this embodiment, the method further includes a step that the control plane expands the user plane module. According to the invention, the control plane module adds, to the gateway according to the service request message and resource information of the gateway, at least one expansion submodule configured to implement at least one function that corresponds to the service request message. In this case, in the foregoing step 203 of this embodiment, the control plane module generates the service control rule according to the service request message. A specific implementation manner may be: the control plane module generates the service control rule, where the service control rule is used to indicate a data operation that needs to be executed by the user plane module after the at least one expansion submodule is added.

In this embodiment, according to a requirement of an operator, in addition to a basic function, the gateway device needs to implement some special functions, such as video acceleration and web browsing acceleration. In this case, the control plane module needs to add at least one expansion submodule to the gateway according to the service request message. The expansion submodules are configured to implement at least one special function involved in the service request message. For example, in a video acceleration request message, a video acceleration function is involved, but this function is not a basic function of the gateway, and the user plane module does not include a submodule configured to implement the video acceleration function. Therefore, the control plane module adds at least one expansion submodule to the gateway, where the expansion submodule is configured to implement the video acceleration function. A quantity of expansion submodules that are added may be determined according to a resource status and a traffic volume of the gateway, which is not specifically limited herein. When the control plane module generates the service control rule, considering an expansion submodule to be added, content indicating a data operation that needs to be executed by the expansion submodule may be added to the service control rule, content indicating a data operation that needs to be executed by another user plane module that participates in the video acceleration service also needs to be updated, which may be considered as that a path node, that is, the expansion submodule, is added to a data path of a service data packet of another user plane module.

In this embodiment, a user plane module is added to enable a gateway to implement a special function required by an operator, so that expansions and performance of the gateway can be flexibly expanded and improved.

The foregoing process in which a gateway implements a specific service is described in detail below by using three specific embodiments.

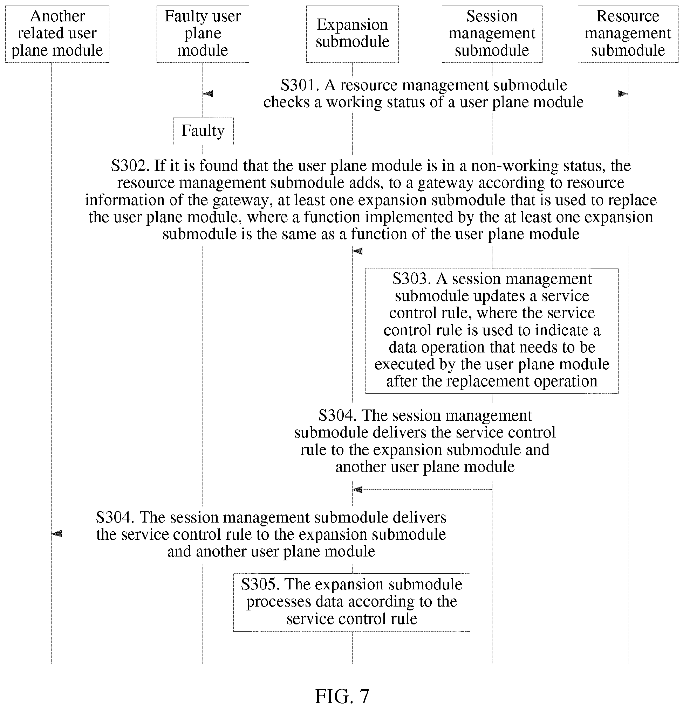

FIG. 7 is a flowchart of Embodiment 1 of service processing of a gateway according to the present invention. In this embodiment, the control plane module is also responsible for checking a status of the user plane module, so as to remove a fault of the gateway in time. As shown in FIG. 7, the method of this embodiment may include:
S301: A resource management submodule checks a working status of a user plane module.

Specifically, the resource management submodule may determine whether a status of the user plane module is normal by determining whether a connection to the user plane module is normal; or the resource management submodule may send a query message to the user plane module, and determine whether the status of the user plane module is normal according to a feedback to the query message; or the user plane module may send identification information to the control plane module, and if the control plane module does not receive the identification information from the user plane module within a specified period of time, it indicates that the user plane module is in a non-working status, and troubleshooting needs to be performed. The foregoing methods may be periodically performed. A specific implementation manner is not limited in this embodiment.

S302: If it is found that the user plane module is in a non-working status, the resource management submodule adds, to a gateway according to resource information of the gateway, at least one expansion submodule that is used to replace the user plane module, where a function implemented by the at least one expansion submodule is the same as a function of the user plane module.

In this embodiment, if the resource management submodule finds that the user plane module is in the non-working status, a solution is to additionally add at least one expansion submodule configured to implement a function of the faulty user plane module, and replace the faulty user plane module with the at least one expansion submodule, which is equivalent to abandoning the faulty user plane module and replacing the user plane module with another module, so that a fault of the gateway can be rapidly removed.

S303: A session management submodule updates a service control rule, where the service control rule is used to indicate a data operation that needs to be executed by the user plane module after the replacement operation.

In this embodiment, because the user plane module is replaced, the control plane module needs to update the service control rule. A specific implementation manner may be to update only a service control rule related to the faulty user plane module, wherein in a data operation part of a service control rule after the update, original content of the faulty user plane module is updated to content of the added expansion submodule, which may be considered as that one path node in a data path of a service data packet of the user plane module is changed.

S304: The session management submodule delivers the service control rule to the expansion submodule and another related user plane module.

In this embodiment, a process in which the control plane module delivers the service control rule to the user plane module is similar to step 102 of the foregoing method embodiment, and details are not described herein again.

S305: The expansion submodule processes data according to the service control rule.

In this embodiment, a process in which the user plane module processes data according to the service control rule is similar to step 103 of the foregoing method embodiment, and details are not described herein again.

In this embodiment, the control plane module of the gateway can find a faulty user plane module in the gateway in time by checking a status of the user plane module, and remove the fault, so as to implement efficient troubleshooting for the gateway.

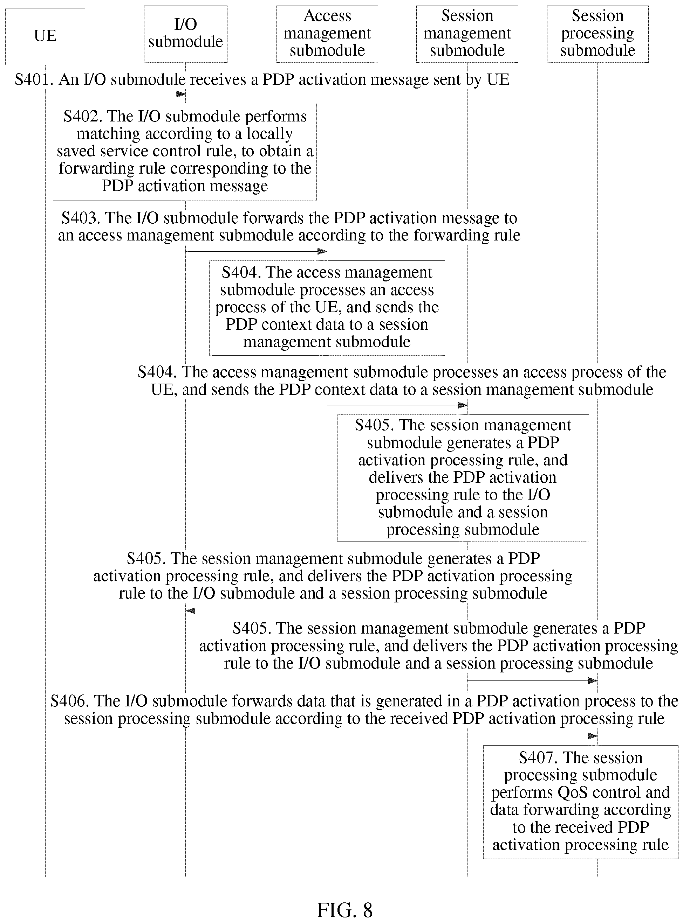

FIG. 8 is a flowchart of Embodiment 2 of service processing of a gateway according to the present invention. As shown in FIG. 8, a method of this embodiment may include:
A Packet Data Protocol (Packet Data Protocol, PDP for short below) activation process may include two cases. One is that when UE initially performs access, a gateway activates a default PDP context for the UE, where the default PDP context is used as a default bearer channel of the UE. The other is that when UE performs a specific service, a gateway reactivates a PDP context of a dedicated bearer for the UE, to carry a specified service. Generally, there is a QoS requirement on the dedicated bearer in this case.

S401: An I/O submodule receives a PDP activation message sent by UE.

This embodiment is a specific embodiment of PDP activation, and the PDP activation message sent by the UE may be a Create PDP Context Request message defined in the 3GPP.

S402: The I/O submodule performs matching according to a locally saved service control rule, to obtain a forwarding rule corresponding to the PDP activation message.

In this embodiment, the I/O submodule matches the received PDP activation message with multiple locally saved service control rules one by one. The multiple service control rules may be preset by the control plane module according to a basic function of the gateway and a gateway message defined in 3GPP standards. The I/O submodule parses out a protocol header in the PDP activation message, and matches the protocol header with one or more pieces of rule feature information of the multiple locally saved service control rules, to find a forwarding rule that corresponds to the PDP activation message. Content of the forwarding rule may be:
|Request=Create PDP Context RequestlActions=Controller:Accessl
where Request represents rule feature information of the forwarding rule, and Actions represents a data operation.

According to the forwarding rule, the I/O submodule learns that the PDP activation message needs to be forwarded to an access management submodule of the control plane module.

S403: The I/O submodule forwards the PDP activation message to an access management submodule according to the forwarding rule.

S404: The access management submodule processes an access process of the UE, and sends PDP context data to a session management submodule.

In this embodiment, the access management submodule interacts with a user data network element to acquire context information of a user, and generates PDP context data according to the context information, the PDP activation message, subscription information of the user and the like, and then sends the PDP context data to the session management submodule of the control plane module.

S405: The session management submodule generates a PDP activation processing rule, and delivers the PDP activation processing rule to the I/O submodule and a session processing submodule.

In this embodiment, the session management submodule selects, according to the received PDP context data and a resource usage status of the session processing submodule of the user plane module of the gateway, one of the session processing submodules to process the PDP activation process of the UE, generates a PDP activation processing rule according to a result of the selection, and then delivers the PDP activation processing rule to the I/O submodule and the selected session processing submodule.

S406: The I/O submodule forwards data that is generated in the PDP activation process to the session processing submodule according to the received PDP activation processing rule.

In this embodiment, the PDP activation processing rule generated by the session management submodule includes content indicating a data operation that needs to be executed by the I/O submodule, and the I/O submodule can learn, according to the PDP activation processing rule, the data operation that needs to be executed by the I/O submodule.

S407: The session processing submodule performs QoS control and data forwarding according to the received PDP activation processing rule.

In this embodiment, the PDP activation processing rule generated by the session management submodule includes content indicating a data operation that needs to be executed by the session processing submodule, for example, bearer information of the UE and a data path. The session processing submodule can learn, according to the PDP activation processing rule, a specific parameter of QoS control that needs to be executed by the session processing submodule, and a target to which a data packet is to be forwarded.

According to the foregoing PDP activation process, the gateway establishes a default or dedicated bearer for the UE, and the UE can transmit service data on the bearer. When a service data packet of the UE on the bearer arrives at the I/O submodule, the I/O submodule performs matching according to multiple locally saved service control rules, to obtain a service control rule that corresponds to a service request message of the UE, and executes a data operation indicated by the service control rule, to forward the service data packet. This process of the I/O submodule can be executed repeatedly, to implement forwarding of the service data packet inside the gateway, so that the I/O submodule finally transfers result data out of the gateway. Likewise, a session submodule may also perform matching according to locally saved service control rules, to obtain a service control rule that corresponds to a service request message of the UE, and then executes a corresponding data operation according to the service control rule. As can be seen from the foregoing data operation process of the user plane module, that the control plane module generates the service control rule may be considered as that a data path for processing a service data packet is established between the user plane modules. Each user plane module only needs to execute a related data operation in the service control rule, and the data path can be automatically established.

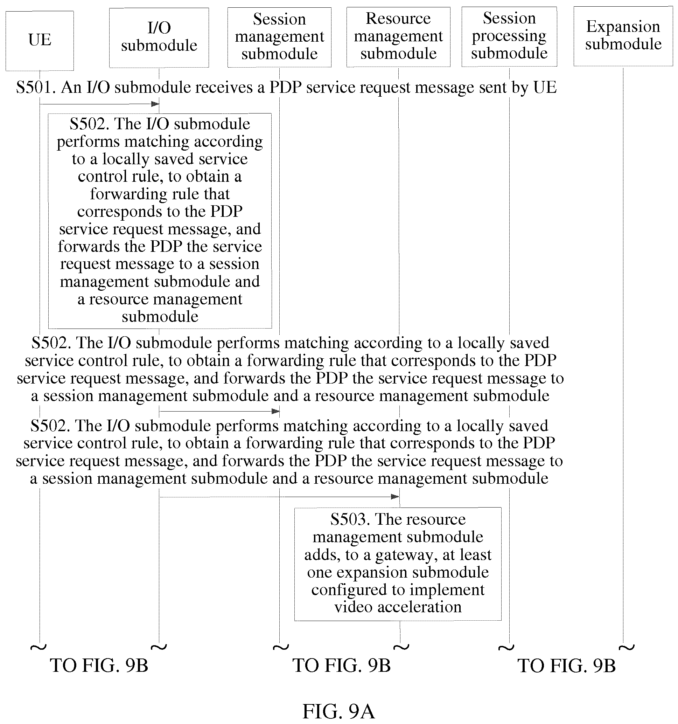

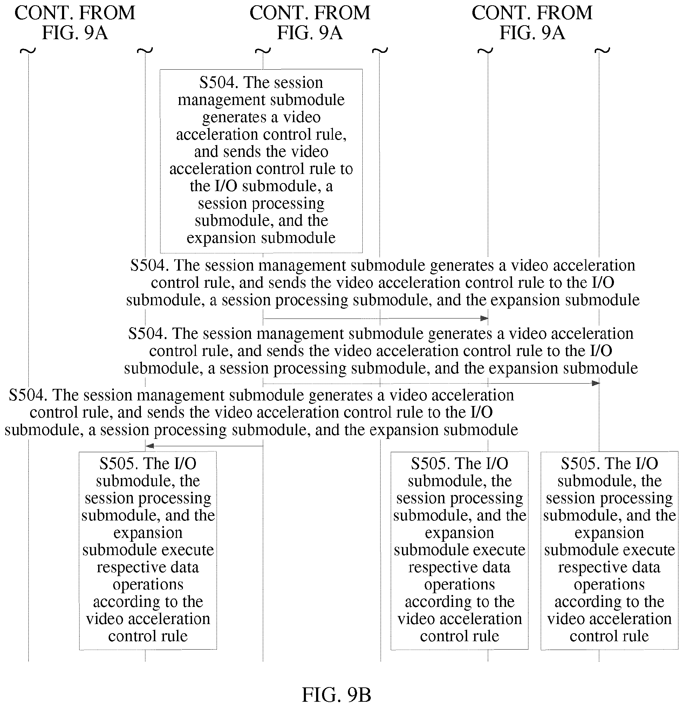

FIG. 9A and FIG. 9B are a flowchart of Embodiment 3 of service processing of a gateway according to the present invention. As shown in FIG. 9A and FIG. 9B, a method of this embodiment may include:
Generally, a user plane module of a gateway includes two types of basic functional modules: an I/O submodule and a session processing submodule. In an actual gateway device, there are some more complicated functions, such as charging and content identification, or user plane functions such as content compression, web acceleration, and video acceleration are added according to a special requirement of an operator. In a gateway architecture, a manner of establishing a data path based on a service control rule may be as follows: A video acceleration service is used as an example in this embodiment.

S501: An I/O submodule receives a PDP service request message sent by UE.

S502: The I/O submodule performs matching according to a locally saved service control rule, to obtain a forwarding rule that corresponds to the PDP service request message, and forwards the PDP service request message to a session management submodule and a resource management submodule.

In this embodiment, the I/O submodule matches the PDP service request message with locally saved service control rules one by one, and learns, according to a result of the matching, that the PDP service is a video acceleration service, and a service data packet needs to be forwarded to a control plane module, for example, forwarded to a session management submodule of the control plane module. The I/O submodule executes the forwarding operation.

S503: The resource management submodule adds, to a gateway, at least one expansion submodule configured to implement video acceleration.

In this embodiment, the control plane module learns, according to the PDP service request message, that the PDP service is a video acceleration service. However, the current user plane module does not include a module that can provide a video acceleration function. Therefore, according to a current resource usage status, the control plane module adds, to the gateway, at least one expansion submodule configured to implement the video acceleration function, so as to enable the gateway to have a user plane function of video acceleration.

S504: The session management submodule generates a video acceleration control rule, and sends the video acceleration control rule to the I/O submodule, a session processing submodule, and the expansion submodule.

In this embodiment, the video acceleration control rule generated by the session management submodule includes content indicating a data operation that needs to be executed by the added expansion submodule, and further includes content indicating a data operation that needs to be executed by another user plane module that participates in the video acceleration service. For example, video acceleration requires I/O and QoS management. Therefore, at least one I/O submodule and at least one session processing submodule participate in the video acceleration service. The user plane modules also receive the video acceleration control rule delivered by the control plane module, and are instructed to forward data or to perform QoS management.

S505: The I/O submodule, the session processing submodule, and the expansion submodule execute respective data operations according to the video acceleration control rule.

According to the foregoing process, the gateway can implement a video acceleration function required by an operator. Based on a similar process, the gateway may also implement multiple special functions such as data compression, web acceleration, and a QoS service based on charging. Processes for implementing the special functions are simple and efficient, and the special functions can be flexibly deployed and implemented.

In the several embodiments provided in the present invention, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor to perform a part of the steps of the methods described in the embodiments of the present invention. The foregoing storage medium includes: any medium that can store program code, such as a USB flash drive, a removable hard disk, a read-only memory (ROM), a random access memory (RAM), a magnetic disk, or an optical disc.

It may be clearly understood by persons skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or part of the functions described above. For a detailed working process of the foregoing apparatus, reference may be made to a corresponding process in the foregoing method embodiments, and details are not described herein again.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make replacements to some or all technical features thereof, without departing from the scope of the technical solutions of the embodiments of the present invention as defined by the appended claims.

## Claims

1. A gateway, wherein the gateway runs on a cloud platform, and comprises:
a control plane module (21) configured to implement a control plane function of the gateway and at least one user plane module (22) configured to implement a user plane function of the gateway, wherein
the control plane module (21) is connected to the at least one user plane module by using an interface and the control plane module is configured to receive a service request message sent by the user plane module;
the control plane module (21) is configured to: generate a service control rule according to the service request message and deliver the service control rule to the user plane module; to add at least one expansion submodule (223) to the gateway according to the service request message and resource information of the gateway wherein the expansion submodule is configured to implement at least one function that corresponds to the service request message, wherein the service control rule is used to indicate a data operation that needs to be executed by the user plane module of the gateway; and
the user plane module (22) is configured to forward or process data according to the received service control rule.

2. The gateway according to claim 1, wherein the user plane module (24) comprises: at least one input/output I/O submodule (221), at least one session processing submodule (222), at least one expansion submodule (223), and an internal exchange submodule (224), wherein
the I/O submodule (221) is configured to implement a data I/O function of the gateway, and implement, according to the service control rule, forwarding of a service message of a user equipment;
the session processing submodule (222) is configured to implement a service session processing function of the UE according to the service control rule;
the expansion submodule (223) is configured to expand the user plane module according to the service control rule of the control plane module; and
the internal exchange submodule (224) is configured to form a communications link between two or more user plane modules, to implement data exchange between the two or more user plane modules.

3. The gateway according to claim 1 or 2, wherein the control plane module (21) comprises:
an access management submodule (211), configured to implement an access management function of a user equipment;
a session management submodule (212), configured to implement a service session management function of the user equipment and generate the service control rule; and
a resource management submodule (213), configured to manage a resource used by the user plane module.

4. The gateway according to claim 3, wherein a I/O submodule (221) is specifically configured to receive a service request message of the user equipment, and forward the service request message to the access management submodule according to a locally saved service control rule;
the access management submodule (211) is specifically configured to process signaling of an access process of the user equipment, and send context data of the user equipment to the session management submodule;
the session management submodule (212) is specifically configured to generate the service control rule according to the service request message and the context data of the a user equipment;
the I/O submodule (221) is further configured to forward the service control rule to the session processing submodule; and
the session processing submodule is specifically configured to implement the service session processing function of the user equipment according to the service control rule.

5. The gateway according to claim 3, wherein the resource management submodule (213) is specifically configured to add, to the gateway according to a service request message of the user equipment and resource information of the gateway, at least one expansion submodule that is configured to implement at least one function corresponding to the service request message; and
the session management submodule (212) is specifically configured to generate the service control rule, wherein the service control rule is used to indicate a data operation that needs to be executed by the user plane module (22) after the at least one expansion submodule is added.

6. The gateway according to claim 3, wherein the resource management submodule (213) is specifically configured to check a working status of the user plane module (22); and if it is found that the user plane module is in a non-working status, the resource management submodule (213) adds, to the gateway according to resource information of the gateway, at least one expansion submodule that is used to replace the user plane module, wherein a function implemented by the at least one expansion submodule is the same as a function of the user plane module; and
the session management submodule (212) is specifically configured to update the service control rule, wherein the service control rule is used to indicate a data operation that needs to be executed by the user plane module after the replacement operation.

7. A message processing method, wherein the method is applied to a gateway, the gateway runs on a cloud platform, and the method comprises:
receiving, by a control plane module of the gateway, a service request message sent by a user plane module;
generating (101), by the control plane module of the gateway, a service control rule according to the service request message, wherein the service control rule is used to indicate a data operation that needs to be executed by a user plane module of the gateway;
delivering (102), by the control plane module, the service control rule to the user plane module and adding at least one expansion submodule to the gateway according to the service request message and resource information of the gateway, wherein the expansion submodule is configured to implement at least one function that corresponds to the service request message; and
forwarding or processing (103), by the user plane module, data according to the service control rule.

8. The method according to claim 7, before the forwarding or processing (103), by the user plane module, data according to the service control rule, further comprising:
receiving, by the user plane module, the service control rule sent by the control plane module, and locally saving the service control rule; and
matching, by the user plane module, one or more pieces of protocol header information of a service request message with all locally saved service control rules, to acquire a service control rule corresponding to the service request message, wherein the service request message is used to represent service information that is requested by a user equipment.

## Patentansprüche

1. Gateway, wobei das Gateway in einer Cloud-Plattform läuft und Folgendes umfasst:
ein Steuerebenenmodul (21), das konfiguriert ist, eine Steuerebenenfunktion des Gateways zu implementieren, und mindestens ein Anwenderebenenmodul (22), das konfiguriert ist, eine Anwenderebenenfunktion des Gateways zu implementieren, wobei
das Steuerebenenmodul (21) mit dem mindestens einen Anwenderebenenmodul unter Verwendung einer Schnittstelle verbunden ist und das Steuerebenenmodul konfiguriert ist, eine Dienstanforderungsnachricht, die durch das Anwenderebenenmodul gesendet wurde, zu empfangen;
das Steuerebenenmodul (21) konfiguriert ist zum
Erzeugen einer Dienststeuerregel gemäß der Dienstanforderungsnachricht und Übermitteln der Dienststeuerregel zum Anwenderebenenmodul und Hinzufügen mindestens eines Erweiterungsuntermoduls (223) zum Gateway gemäß der Dienstanforderungsnachricht und Betriebsmittelinformationen des Gateways, wobei das Erweiterungsuntermodul konfiguriert ist, mindestens eine Funktion zu implementieren, die der Dienstanforderungsnachricht entspricht, wobei die Dienststeuerregel verwendet wird, um eine Datenoperation anzuzeigen, die durch das Anwenderebenenmodul des Gateways ausgeführt werden muss; und
das Anwenderebenenmodul (22) konfiguriert ist, Daten gemäß der empfangenen Dienststeuerregel weiterzuleiten oder zu verarbeiten.

2. Gateway nach Anspruch 1, wobei das Anwenderebenenmodul (24) Folgendes umfasst: mindestens ein Eingabe-/Ausgabe-Untermodul, I/O-Untermodul, (221), mindestens ein Sitzungsverarbeitungsuntermodul (222), mindestens ein Erweiterungsuntermodul (223) und ein Untermodul (224) zum internen Austausch, wobei
das I/O-Untermodul (221) konfiguriert ist, eine Daten-I/O-Funktion des Gateways zu implementieren und gemäß der Dienststeuerregel ein Weiterleiten einer Dienstnachricht eines Anwendergeräts (UE - User Equipment) zu implementieren; das Sitzungsverarbeitungsuntermodul (222) konfiguriert ist, eine Dienstsitzungsverarbeitungsfunktion des UE gemäß der Dienststeuerregel zu implementieren;
das Erweiterungsuntermodul (223) konfiguriert ist, das Anwenderebenenmodul gemäß der Dienststeuerregel des Steuerebenenmoduls zu erweitern; und
das Untermodul (224) zum internen Austausch konfiguriert ist, eine Kommunikationsverbindung zwischen zwei oder mehr Anwenderebenenmodulen zu bilden, um einen Datenaustausch zwischen den zwei oder mehr Anwenderebenenmodulen zu implementieren.

3. Gateway nach Anspruch 1 oder 2, wobei das Steuerebenenmodul (21) Folgendes umfasst:
ein Zugriffsmanagementuntermodul (211), das konfiguriert ist, eine Zugriffsmanagementfunktion eines Anwendergeräts zu implementieren;
ein Sitzungsmanagementuntermodul (212), das konfiguriert ist, eine Dienstsitzungsmanagementfunktion des Anwendergeräts zu implementieren und die Dienststeuerregel zu erzeugen; und
ein Betriebsmittelmanagementuntermodul (213), das konfiguriert ist, ein Betriebsmittel, das durch das Anwenderebenenmodul verwendet wird, zu managen.

4. Gateway nach Anspruch 3, wobei ein I/O-Untermodul (221) speziell konfiguriert ist, eine Dienstanforderungsnachricht des Anwendergeräts zu empfangen und die Dienstanforderungsnachricht gemäß einer lokal gespeicherten Dienststeuerregel zum Zugriffsmanagementuntermodul weiterzuleiten;
das Zugriffsmanagementuntermodul (211) speziell konfiguriert ist, eine Signalisierung eines Zugriffsprozesses des Anwendergeräts zu verarbeiten und Kontextdaten des Anwendergeräts zum Sitzungsmanagementuntermodul zu senden; das Sitzungsmanagementuntermodul (212) speziell konfiguriert ist, die Dienststeuerregel gemäß der Dienstanforderungsnachricht und den Kontextdaten des Anwendergeräts zu erzeugen;
das I/O-Untermodul (221) ferner konfiguriert ist, die Dienststeuerregel zum Sitzungsverarbeitungsuntermodul weiterzuleiten; und
das Sitzungsverarbeitungsuntermodul speziell konfiguriert ist, die Dienstsitzungsverarbeitungsfunktion des Anwendergeräts gemäß der Dienststeuerregel zu implementieren.

5. Gateway nach Anspruch 3, wobei das Betriebsmittelmanagementuntermodul (213) speziell konfiguriert ist, gemäß einer Dienstanforderungsnachricht des Anwendergeräts und Betriebsmittelinformationen des Gateways mindestens ein Erweiterungsuntermodul, das konfiguriert ist, mindestens eine Funktion entsprechend der Dienstanforderungsnachricht zu implementieren, zum Gateway hinzuzufügen, und
das Sitzungsmanagementuntermodul (212) speziell konfiguriert ist, die Dienststeuerregel zu erzeugen, wobei die Dienststeuerregel verwendet wird, um eine Datenoperation anzuzeigen, die durch das Anwenderebenenmodul (22) ausgeführt werden muss, nachdem das mindestens eine Erweiterungsuntermodul hinzugefügt worden ist.

6. Gateway nach Anspruch 3, wobei das Betriebsmittelmanagementuntermodul (213) speziell konfiguriert ist, einen Betriebszustand des Anwenderebenenmoduls (22) zu prüfen; und falls festgestellt wird, dass das Anwenderebenenmodul sich in einem nicht arbeitenden Zustand befindet, das Betriebsmittelmanagementuntermodul (213) gemäß Betriebsmittelinformationen des Gateways mindestens ein Erweiterungsuntermodul, das verwendet wird, um das Anwenderebenenmodul zu ersetzen, zum Gateway hinzufügt, wobei eine Funktion, die durch das mindestens eine Erweiterungsuntermodul implementiert wird, dieselbe ist wie eine Funktion des Anwenderebenenmoduls; und
das Sitzungsmanagementuntermodul (212) speziell konfiguriert ist, die Dienststeuerregel zu aktualisieren, wobei die Dienststeuerregel verwendet wird, um eine Datenoperation, die durch das Anwenderebenenmodul nach der Ersatzoperation ausgeführt werden muss, anzuzeigen.

7. Nachrichtenverarbeitungsverfahren, wobei das Verfahren auf ein Gateway angewendet wird, das Gateway in einer Cloud-Plattform läuft und das Verfahren Folgendes umfasst:
Empfangen durch ein Steuerebenenmodul des Gateways einer Dienstanforderungsnachricht, die durch ein Anwenderebenenmodul gesendet wurde;
Erzeugen (101) durch das Steuerebenenmodul des Gateways einer Dienststeuerregel gemäß der Dienstanforderungsnachricht, wobei die Dienststeuerregel verwendet wird, um eine Datenoperation anzuzeigen, die durch ein Anwenderebenenmodul des Gateways ausgeführt werden muss;
Übermitteln (102) durch das Steuerebenenmodul der Dienststeuerregel zum Anwenderebenenmodul und Hinzufügen mindestens eines Erweiterungsuntermoduls zum Gateway gemäß der Dienstanforderungsnachricht und Betriebsmittelinformationen des Gateways, wobei das Erweiterungsuntermodul konfiguriert ist, mindestens eine Funktion zu implementieren, die der Dienstanforderungsnachricht entspricht; und
Weiterleiten oder Verarbeiten (103) durch das Anwenderebenenmodul von Daten gemäß der Dienststeuerregel.

8. Verfahren nach Anspruch 7, das vor dem Weiterleiten oder Verarbeiten (103) von Daten gemäß der Dienststeuerregel durch das Anwenderebenenmodul ferner Folgendes umfasst:
Empfangen durch das Anwenderebenenmodul der Dienststeuerregel, die durch das Steuerebenenmodul gesendet wurde, und lokales Speichern der Dienststeuerregel; und
Abgleichen durch das Anwenderebenenmodul eines oder mehrerer Stücke von Protokollkopfteilinformationen einer Dienstanforderungsnachricht mit allen lokal gespeicherten Dienststeuerregeln, um eine Dienststeuerregel zu erfassen, die der Dienstanforderungsnachricht entspricht, wobei die Dienstanforderungsnachricht verwendet wird, um Dienstinformationen zu repräsentieren, die durch ein Anwendergerät angefordert werden.

## Revendications

1. Passerelle, la passerelle fonctionnant sur une plateforme nuagique, et comprenant :
un module de plan de commande (21) configuré pour mettre en œuvre une fonction de plan de commande de la passerelle et au moins un module de plan utilisateur (22) configuré pour mettre en œuvre une fonction de plan utilisateur de la passerelle, dans laquelle
le module de plan de commande (21) est connecté à l'au moins un module de plan utilisateur en utilisant une interface et le module de plan de commande est configuré pour recevoir un message de demande de service envoyé par le module de plan utilisateur ;
le module de plan de commande (21) est configuré pour : générer une règle de commande de service selon le message de demande de service et distribuer la règle de commande de service au module de plan utilisateur ; ajouter au moins un sous-module d'extension (223) à la passerelle selon le message de demande de service et des informations de ressource de la passerelle, le sous-module d'extension étant configuré pour mettre en œuvre au moins une fonction qui correspond au message de demande de service, la règle de commande de service étant utilisée pour indiquer une opération de données qui doit être exécutée par le module de plan utilisateur de la passerelle ; et
le module de plan utilisateur (22) est configuré pour retransmettre ou traiter des données selon la règle de commande de service reçue.

2. Passerelle selon la revendication 1, dans laquelle le module de plan utilisateur (24) comprend : au moins un sous-module d'entrée/sortie E/S (221), au moins un sous-module de traitement de session (222), au moins un sous-module d'extension (223) et un sous-module d'échange interne (224), dans laquelle
le sous-module d'E/S (221) est configuré pour mettre en œuvre une fonction d'E/S de données de la passerelle, et mettre en œuvre, selon la règle de commande de service, la retransmission d'un message de service d'un équipement utilisateur ;
le sous-module de traitement de session (222) est configuré pour mettre en œuvre une fonction de traitement de session de service de l'UE selon la règle de commande de service ;
le sous-module d'extension (223) est configuré pour étendre le module de plan utilisateur selon la règle de commande de service du module de plan de commande ; et
le sous-module d'échange interne (224) est configuré pour former une liaison de communication entre deux modules de plan utilisateur ou plus, afin de mettre en œuvre un échange de données entre les deux modules de plan utilisateur ou plus.

3. Passerelle selon la revendication 1 ou 2, dans laquelle le module de plan de commande (21) comprend :
un sous-module de gestion d'accès (211), configuré pour mettre en œuvre une fonction de gestion d'accès d'un équipement utilisateur ;
un sous-module de gestion de session (212), configuré pour mettre en œuvre une fonction de gestion de session de service de l'équipement utilisateur et générer la règle de commande de service ; et
un sous-module de gestion de ressource (213), configuré pour gérer une ressource utilisée par le module de plan utilisateur.

4. Passerelle selon la revendication 3, dans laquelle un sous-module d'E/S (221) est spécifiquement configuré pour recevoir un message de demande de service de l'équipement utilisateur et retransmettre le message de demande de service au sous-module de gestion d'accès selon une règle de commande de service sauvegardée localement ;
le sous-module de gestion d'accès (211) est spécifiquement configuré pour traiter la signalisation d'un processus d'accès de l'équipement utilisateur et envoyer des données contextuelles de l'équipement utilisateur au sous-module de gestion de session ;
le sous-module de gestion de session (212) est spécifiquement configuré pour générer la règle de commande de service selon le message de demande de service et les données contextuelles de l'équipement utilisateur ;
le sous-module d'E/S (221) est en outre configuré pour retransmettre la règle de commande de service au sous-module de traitement de session ; et
le sous-module de traitement de session est spécifiquement configuré pour mettre en œuvre la fonction de traitement de session de service de l'équipement utilisateur selon la règle de commande de service.

5. Passerelle selon la revendication 3, dans laquelle le sous-module de gestion de ressource (213) est spécifiquement configuré pour ajouter, à la passerelle selon un message de demande de service de l'équipement utilisateur et des informations de ressource de la passerelle, au moins un sous-module d'extension qui est configuré pour mettre en œuvre au moins une fonction correspondant au message de demande de service ; et
le sous-module de gestion de session (212) est spécifiquement configuré pour générer la règle de commande de service, la règle de commande de service étant utilisée pour indiquer une opération de données qui doit être exécutée par le module de plan utilisateur (22) après que l'au moins un sous-module d'extension a été ajouté.

6. Passerelle selon la revendication 3, dans laquelle le sous-module de gestion de ressource (213) est spécifiquement configuré pour vérifier un état opérationnel du module de plan utilisateur (22) ; et s'il s'avère que le module de plan utilisateur se trouve dans un état non opérationnel, le sous-module de gestion de ressource (213) ajoute, à la passerelle selon des informations de ressource de la passerelle, au moins un sous-module d'extension qui est utilisé pour remplacer le module de plan utilisateur, une fonction mise en œuvre par l'au moins un sous-module d'extension étant la même qu'une fonction du module de plan utilisateur ; et
le sous-module de gestion de session (212) est spécifiquement configuré pour mettre à jour la règle de commande de service, la règle de commande de service étant utilisée pour indiquer une opération de données qui doit être exécutée par le module de plan utilisateur après l'opération de remplacement.

7. Procédé de traitement de message, le procédé étant appliqué à une passerelle, la passerelle fonctionnant sur une plateforme nuagique, et le procédé comprenant les étapes consistant à :
recevoir, par un module de plan de commande de la passerelle, un message de demande de service envoyé par un module de plan utilisateur ;
générer (101), par le module de plan de commande de la passerelle, une règle de commande de service selon le message de demande de service, la règle de commande de service étant utilisée pour indiquer une opération de données qui doit être exécutée par un module de plan utilisateur de la passerelle ;
distribuer (102), par le module de plan de commande, la règle de commande de service au module de plan utilisateur et ajouter au moins un sous-module d'extension à la passerelle selon le message de demande de service et des informations de ressource de la passerelle,
le sous-module d'extension étant configuré pour
mettre en œuvre au moins une fonction qui correspond au message de demande de service ; et
retransmettre ou traiter (103), par le module de plan utilisateur, des données selon la règle de commande de service.

8. Procédé selon la revendication 7, comprenant en outre, avant la retransmission ou le traitement (103), par le module de plan utilisateur, de données selon la règle de commande de service :
la réception, par le module de plan utilisateur, de la règle de commande de service envoyée par le module de plan de commande, et la sauvegarde locale de la règle de commande de service ; et
la mise en correspondance, par le module de plan utilisateur, d'un ou de plusieurs éléments d'informations d'en-tête de protocole d'un message de demande de service avec toutes les règles de commande de service sauvegardées localement pour acquérir une règle de commande de service correspondant au message de demande de service, le message de demande de service étant utilisé pour représenter des informations de service qui sont demandées par un équipement utilisateur.
